# EUROPEAN PATENT APPLICATION

(11) **EP 2 889 068 A1**
(43) Date of publication of application: **01.07.2015**
(21) Application number: 14199142.2
(22) Date of filing: 19.12.2014
(51) Int. Cl.: B01D 21/00, B01D 21/24

(54) **Method and apparatus for using air scouring of a screen in a water treatment facility**

(30) Priority: 27.12.2013 US 201314142197; 28.08.2014 US 201414471247
(71) Applicant: ClearCove Systems, Inc., Rochester, NY 14623 (US)
(72) Inventor: Wright, Terry, Rochester, NY 14610 (US); Cornelison, Timothy J., Saugerties, NY 12477 (US)
(74) Representative: Emde, Eric

(57) **Abstract**

An SBX assembly comprising an ultrafine screen; a three-dimensional screen frame supportive of the screen and sealed along the screen edges to prevent liquids and solids from bypassing the screen; and an air plenum attached to the frame that provides air scouring at the lowest elevation of the screen. The air plenum is attached to the lower region of the SBX. The plenum is supplied from a source of compressed air and is provided with a plurality of exit holes. Air exiting the plenum flows along the upstream surface of the SBX screening below the level of liquid in the primary settling tank, thereby scouring accumulated residues from the screening surface. Upon reaching the liquid surface, the bubbles migrate horizontally away from the SBX assembly and toward one or more nearby scum troughs in the primary settling tank.

## Description

### RELATIONSHIP TO OTHER APPLICATIONS AND PATENTS

The present application is a Continuation-In-Part of a pending US Patent Application, Serial Number 14/142,197 ('197), filed December 27, 2013, the relevant disclosure of which is incorporated herein by reference. This application is related to co-pending U.S. Patent Application Serial No. 14/464,870 ('870), APPARATUS AND METHOD FOR REMOVAL OF FLOATABLES AND SCUM IN A WATER TREATMENT SYSTEM, which is incorporated herein in its entirety for all purposes.

### FIELD OF THE INVENTION

The present invention relates generally to the field of water treatment; more particularly, to settling tanks in water treatment systems wherein grit and dense solids are allowed to settle from the influent, and buoyant solids (fats, oil, grease, non-dense solids) are prevented from entering into an effluent decanter or fixed discharge pipe; and most particularly, to a method and apparatus for using air scouring in a water treatment facility comprising a vertically-driven screen box assembly (SBX). Beneficially, the scouring air also creates low-velocity surface currents in the influent in the primary settling tank flowing away from the screened decanter that assist in driving floatables into one or more scum troughs for disposal.

### BACKGROUND OF THE INVENTION

In developed and developing countries, primary treatment and disinfection of waste water discharges from collection systems and waste water treatment facilities is the first step to improving water quality. As the countries continue to advance, secondary and tertiary waste water treatment processes are added to provide additional treatment of the primary effluent.

Primary treatment removes large solids via screening and gravitational settling to remove light and dense solids, allowing neutrally buoyant matter to pass into the secondary treatment process or receiving body of water. Primary treatment utilizing gravitational settling or clarification is recognized as removing 20-33% of the organic load as measured in Biochemical Oxygen Demand (BOD). Secondary treatment removes another 50+% of the organic load by converting the BOD to biomass (bacteria) and CO₂.

Secondary treatment provides an environment of adequate temperature, volume, mixing, and oxygen or the absence of oxygen in anaerobic processes to sustain the bacterial population necessary to consume the BOD and nutrients remaining in the waste water after primary treatment. New organic matter enters the treatment facility continuously so a portion of the existing bacterial population is removed from the process to promote the growth of new bacteria. The effectiveness of primary treatment directly affects secondary process or the receiving body of water if discharged from the collection system.

Primary clarifiers or settling basins are recognized as being the most economical means to reduce BOD as there is little energy required and no biomass to maintain. Primary treatment has no biomass therefore no aeration energy; no process controls to monitor the biomass to determine the health of the biomass by the types and quantity of the bacteria; no need to separate and remove or waste the bacteria by moving to a side-stream digester; no need to aerate the digester; and no need to dewater and dispose of the surplus bacteria, also called secondary sludge. The lack of complexity of primary treatment is well suited for developing nations and begins an effective recovery of their surface waters and aquifers resulting in reduced health issues.

Prior art primary clarifiers may be circular or rectangular tanks and are volumetrically and geometrically sized to provide a horizontal fluid velocity lower than the solids settling velocity. The horizontal travel time and distance of the liquid from the inlet to the effluent weir must be greater than the settling time and distance of the suspended solids so that solids settle to the bottom of the tank prior to reaching the elevated effluent weir. These settled solids contain a majority of the BOD in raw sewage. This is an important first stage because the more solids that exit the primary clarifier (or if there is no primary clarifier), the higher the BOD entering the secondary treatment process or the effluent-receiving body of water. The higher the BOD entering the secondary treatment process, the larger the required secondary process equipment and tanks, the more biomass required, generated, and disposed of, the more processing energy that must be expended. The higher the BOD of the effluent stream entering the receiving body of water the greater the eutrophication of the water body and the more detrimental to the health, due to poor disinfection.

A screened decanter comprising an effluent weir is disclosed in US Patent Nos. 7,972,505 ('505), PRIMARY EQUALIZATION TANK SETTLING TANK, and 8,398,864 ('864), SCREENED DECANTER ASSEMBLY FOR A SETTLING TANK, both of which are incorporated in their entirety for all purposes. The movement of a screened decanter is an arc rotating about a pivot. The vertical movement of the screened decanter about a pivot comprises both horizontal and vertical movement in the direction of motion. Depending upon the depth of the tank, the length of the pivot arm requires that the decanter assembly occupy a relatively large footprint in the tank.

The parent application, Serial Number 14/142,197, filed December 27, 2013, discloses an improved screen assembly in the form of a box, oval, or cylinder that is controllably driven in the vertical direction to optimize the exposure of the screen to the wastewater to varying wastewater levels and that can be lifted from the wastewater for backflushing and sterilization in a dedicated overhead apparatus. Because the motion of the screen assembly is only vertical, the required footprint can be relatively small.

In continued use of screen apparatus in wastewater treatment, fouling and blockage of the screening is an important operational problem. What is needed is an apparatus and method for simply and automatically preventing fouling of the upstream surface of any screen assembly.

It is a principal object of the invention to maintain suitable flow of influent through any screen assembly.

It is a further object of the invention to assist in clearing floatable materials from the surface of the influent reservoir in the primary settling tank.

### SUMMARY OF THE INVENTION

Briefly described, the present invention provides an air scouring method and apparatus for simply and automatically preventing fouling of the upstream surface of a screen surface used to screen fluid being decanted from a settling tank. In one aspect of the present application, a screen box ("SBX") assembly in the form of a rectangular box, oval, or cylinder is controllably driven in the vertical direction to optimize the exposure of the screen to the wastewater. As used herein, the term "SBX" should be taken to mean all forms of a screened box for filtering solids from liquids, including a low-profile SBX (LPSBX) as disclosed in the parent application, Serial Number 14/142,197. In another aspect of the application, the screen surface is affixed to or disposed upstream of a static discharge pipe as disclosed in U.S. Patent 7,972,505 ('505).

An SBX assembly in accordance with the present invention comprises an ultrafine screen; a three-dimensional screen frame supportive of the screen and sealed along the screen edges to prevent liquids and solids from bypassing the screen; and an air plenum attached to the frame that provides air scouring at the lowest elevation of the screen.

The air plenum is conveniently attached to the lower region of the SBX assembly and is mounted generally parallel to the surface of the liquid in the primary settling tank. The plenum is supplied from a source of compressed gas, preferably air, and is provided with a plurality of exit holes such that air exiting the plenum is directed generally toward the upstream surface of the SBX screening below the level of liquid in the primary settling tank. Preferably, the SBX screening is inclined outward from bottom to top such that air bubbles from the plenum are forced by gravity to maintain contact with the screening as they migrate upward along the screening surface to reach the liquid surface, thereby scouring accumulated residues from the screening surface. Upon reaching the liquid surface, the bubbles migrate horizontally away from the SBX assembly and toward one or more nearby scum troughs in the primary settling tank. The air flow from the plenum thus primarily scours the screening and then secondarily directs scum and floatables on the surface of the liquid toward the scum troughs.

### BRIEF DESCRIPTION OF THE DRAWINGS

The foregoing and other objects, features, and advantages of the invention, as well as presently preferred embodiments thereof, will become more apparent from a reading of the following description in connection with the accompanying drawings in which:
FIG. 1 is a partial-cutway perspective view of a prior art single tank waste water treatment installation;
FIG. 2 is an elevational cross-sectional view of an SBX having a first embodiment of an air scouring apparatus;
FIG. 3 is an elevational cross-sectional view of an SBX having a second embodiment of an air scouring apparatus;
FIG. 4 is an elevational cross-sectional view of an SBX having a third embodiment of an air scouring apparatus;
FIG. 5 is a schematic elevational cross-sectional view of prior art single tank waste water treatment installation in accordance with the disclosure of the '505 patent;
FIG. 6 is an elevational cross-sectional view of the installation shown in FIG. 5 comprising a first embodiment of an air scouring apparatus disposed upstream of a screen and fixed discharge pipe;
FIG. 7 is an elevational cross-sectional view of the installation shown in FIG. 5 comprising a second embodiment of an air scouring apparatus disposed upstream of a screen and fixed discharge pipe; and
FIG. 8 is an elevational cross-sectional view of the installation shown in FIG. 5 comprising a third embodiment of an air scouring apparatus disposed upstream of a screen and fixed discharge pipe.

### DETAILED DESCRIPTION OF THE INVENTION

Throughout the following description, specific details are set forth in order to provide a more thorough understanding of the invention. However, the invention may be practiced without these particulars. In other instances, well known elements have not been shown or described in detail to avoid unnecessarily obscuring the disclosure. Accordingly, the specification and drawings are to be regarded as illustrative rather than restrictive. It is to be further noted that the drawings are not to scale.

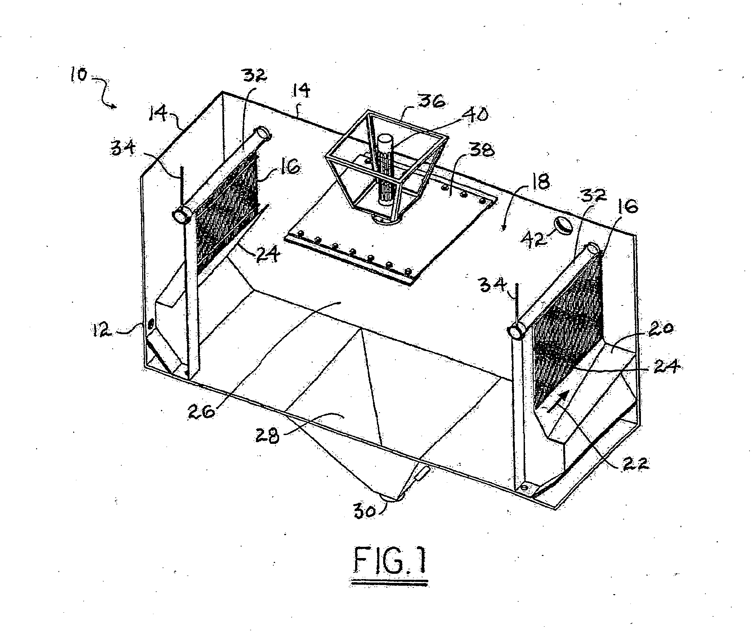

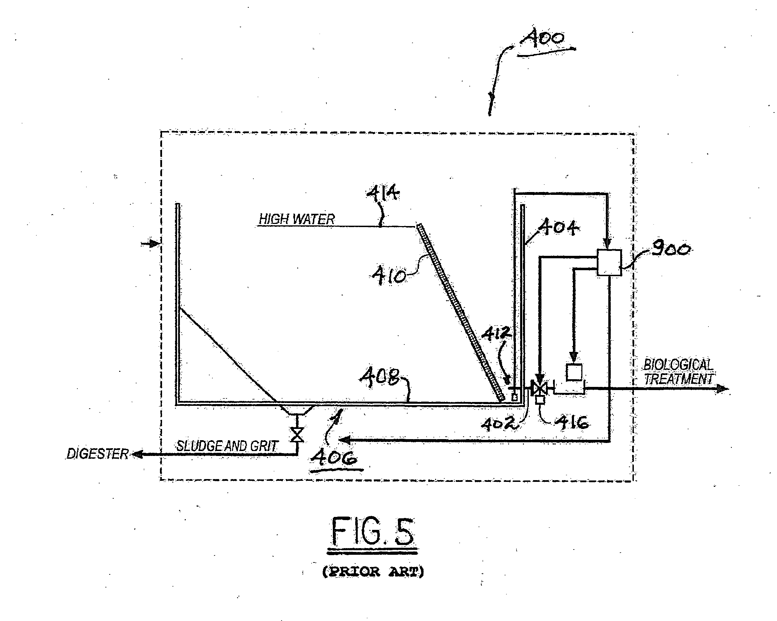

FIGS. 1 through 4 illustrate first embodiments of the invention with respect to an SBX in a fluid treatment system. FIGS. 5 through 8 illustrate embodiments of the invention with respect to a fixed discharge pipe in a fluid treatment system. The present invention is a system (method and apparatus) for air scouring materials from the upstream side of a screen on an SBX or a static discharge pipe in a primary waste water treatment system.

FIG. 1 shows a rectangular primary settling tank as disclosed in co-pending U.S. Patent Application 14/142,099, FLOATABLES AND SCUM REMOVAL APPARATUS FOR A WASTE WATER TREATMENT SYSTEM, which is incorporated in its entirety for all purposes. FIG. 1 primary settling tank 10 receives waste water from a waste water collection system through an influent pipe 12 controlled by a control valve (not shown). The waste water treatment system may also be used in other applications that benefit from an equalized flow into the waste water treatment processes, such as industrial batch discharges, storm water, and septic receiving at a waste water treatment plant. Waste water reaches the waste water treatment system as a result of gravity, the operation of pumps, or both. The primary setting tank has outer walls 14. A bar rack 16 is placed in the primary settling tank 10 between the outer wall 14 and the interior 18 of the primary settling tank 10. Bar rack 16 keeps large inorganic solids and floatables from entering the waste water treatment system.

Primary settling tank 10 is sized based on the daily flow patterns for the collection system using generally known engineering practices. The size of the primary settling tank 10 is large compared to the diameter of influent pipe 12 such that the velocity of the incoming flow decreases dramatically upon entrance of the water into primary settling tank 10. Preferably, the incoming velocity is further reduced by splitting the flow so there are two influent pipes 12 at opposite ends of tank 10 (second influent pipe 12 is not visible in cutaway FIG. 1). An influent feed trough 20 receives the incoming waste water and directs the flow in the direction of arrow 22. As the water level rises to the level of the bar screen 16, scum and sludge (not shown) pass through the bar screen 16, over a fixed weir 24, and into the interior 26 of tank 10. Large floatables (not shown), such as plastic solids, are prevented from passing through the bar screen 16. Sludge collects by gravity in the sludge hopper 28, and can be removed from the sludge hopper 28 through outlet 30. A scum and floatables trough 32 is provided to collect scum and floatables that pass through bar screen 16. A handle 34 is connected to the scum and floatables trough 32 to control the angular position of the scum and floatables trough 32. A scum and floatables collection box (not shown) is in fluid communication with the scum and floatables trough 32.

Primary settling tank 10 is shown with a screen box assembly (SBX) 36 and baffle plate 38. The vertical position of the SBX determines the level of liquid in the primary settling tank 10 and may be adjusted by a controlled lifting mechanism (not shown)attached to a central baffled lifting column 40 that also serves as a drain outlet for screened influent within SBX 36. A tank overflow outlet 42 prevents water from flowing over the sides of the primary setting tank 10 if the water level rises too high.

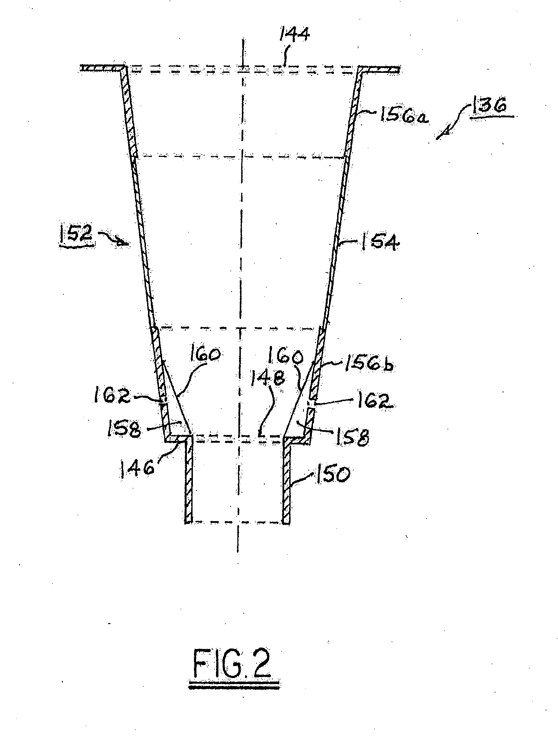

Referring now to FIG. 2, a first embodiment 136 of an improved SBX in accordance with the present application is shown.

The top 144 of SBX 136 is preferably open to allow occasional screen washing via hose or automated spray system (spray ball for symmetrical shapes or spray bar for low-profile rectangular boxes) and to access instruments located inside of the screen box.

The bottom 146 of SBX 136 comprises a solid plate with an opening 148 to allow screened liquid to exit the screen box and thus the tank. Opening 148 preferably is provided with a nipple 150, which may include hose barbs (not shown) formed in known fashion on the outer surface thereof.

The sides 152 of SBX 136 include portions of screen 154 and solid wall 156 a,156b. Sides 152 may be vertical (perpendicular to the liquid surface) or preferably are sloped outward as shown so that the top of the SBX is wider than the bottom creating a frustum shape.

In a currently preferred embodiment, each SBX is formed of fiberglass to avoid the corrosive decay to which metal racks and gaskets may be subject.

An internal air plenum 158 is formed within SBX 136 by installing a plate 160 diagonally between side 156b and bottom 146. A plurality of holes 162 are formed in side 156b to permit air to escape from plenum 158 and form bubbles for air scouring of the outside surfaces of screens 154 as the bubbles rise. For substantially square SBXs having screening on all four sides, similar to SBX 62 shown in FIG. 1, plenum 158 may comprise a continuous tube supplied from a single air source, whereas for elongated SBXs, the shown left and right plenums 158 may be independently supplied via T-connection from a single source (connections not shown).

Preferably, plenum 158 is large enough in cross-sectional area that longitudinal pressure drop is negligible. Holes 162 must be large enough to create bubbles that rise rapidly and scour the screens. In a currently preferred embodiment, holes 162 are 0.067 inch in diameter and spaced at 1.5 inches on center. Preferably, air flow through plenum 158 is about 1 SCF/min and is held constant while SBX 136 is immersed in the influent in tank 10.

Preferably, a solution of sodium hypochlorite (NaClO), e.g. 15%, is added to the air flow to eliminate buildup of biofilm on screens 154. Preferably, air temperature is above ambient such that the solution is vaporized and dispersed through plenum 158. The NaClO solution may be dripped into the air stream or fed continuously, depending upon the size of the facility and consequent volume demand for solution.

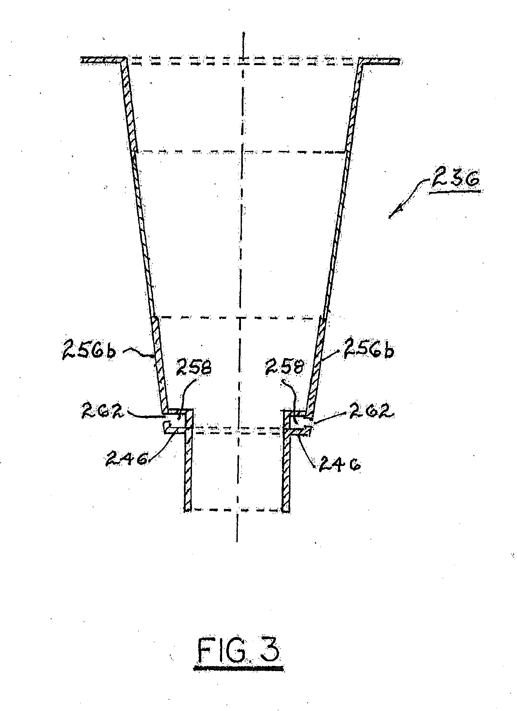

Referring to FIG. 3, a second embodiment 236 of an improved SBX in accordance with the present invention is shown. SBX 236 is substantially identical with first embodiment 136 except that plenums 258 are formed integrally with sides 256b and bottom 246. The size and placement of holes 262 are the same as disclosed above.

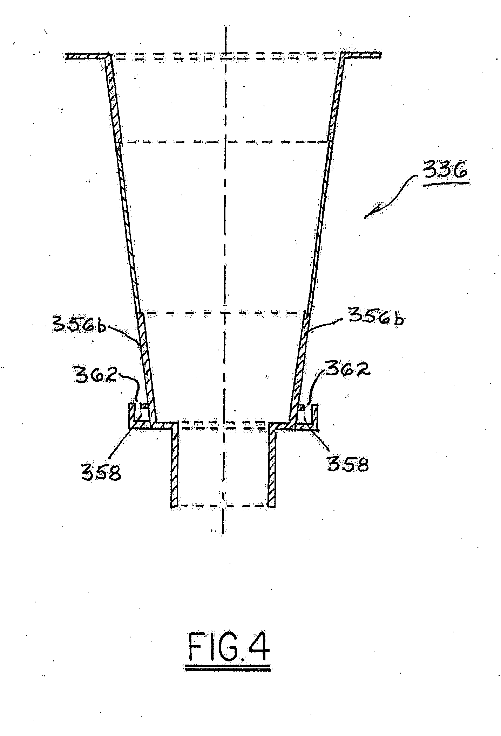

Referring to FIG. 4, a third embodiment 336 of an improved SBX in accordance with the present invention is shown. SBX 336 is substantially identical with first and second embodiments 136,236 except that plenums 358 are formed integrally with sides 356b on the outside thereof. The size and placement of holes 362 are the same as disclosed above. Note that holes 362 are formed exclusively in plenums 358 and not in sides 356b.

In a method for air scouring SBX screens in accordance with the present invention, the air scour starts as the SBX is lowered into the influent in tank 10 when the lower edge of the screen reaches the liquid level. This is done to keep the liquid from flowing into the screen box without the air scour, to reduce fouling. Air scour could be activated at the start of descent but it consumes energy for no process benefit. Air scour continues preferably at a fixed air flow rate during submerged operation of the SBX.

Beneficially, the scouring air bubbles also create low-velocity surface currents in the influent in the primary settling tank flowing away from SBX 136, 236, 336 that assist in driving floatables into one or more scum troughs 32 (FIG. 1) for disposal.

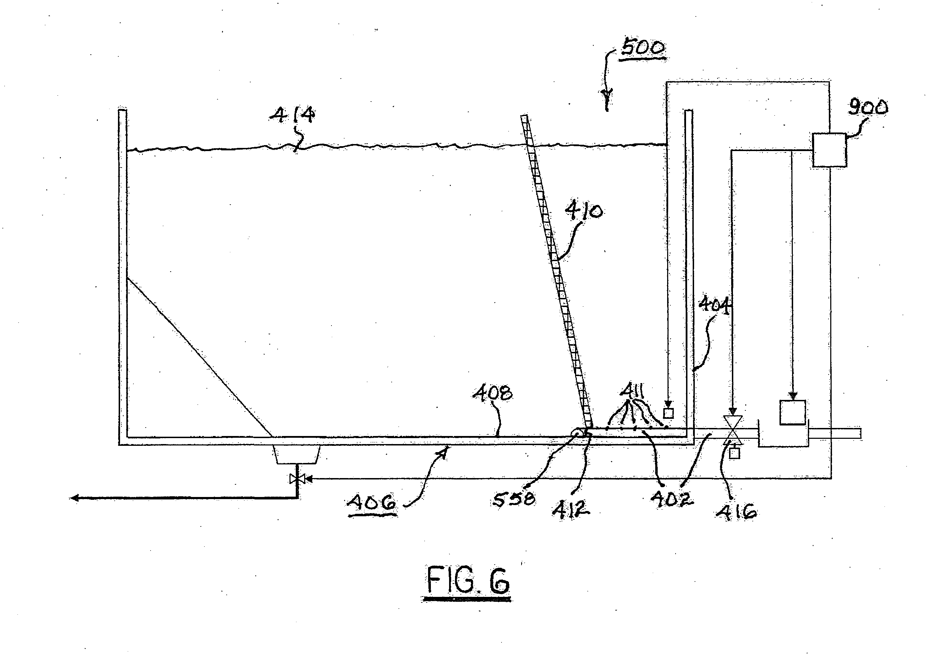

Referring to FIG. 5, a schematic elevational cross-sectional drawing of a prior art alternative primary waste water treatment system 400 is shown, substantially as disclosed as FIG. 3 in the incorporated '505 patent. The discharge mechanism is a fixed discharge pipe 402 passing through a wall 404 of primary settling tank 406 near the bottom 408 thereof. Screen 410 is mounted essentially vertically ahead of discharge pipe 402, is sealed along its edges to the walls (not visible in FIG. 5) of primary settling tank 406, and extends below the closed end 412 of pipe 402 on either side thereof; influent to be discharged enters pipe 402 via openings 411 (see FIG. 6, not visible in FIG. 5) along the top of pipe 402. Screen 410 can vary in diameter or surface area and must extend above high water level 414 and may be static or mechanical. In one embodiment, screen 410 has a greater surface area as it rises up from its base. Fixed discharge pipe 402 has an actuated valve 416 controlled by programmable controller 900 which controls the rate at which screened water exits primary settling tank 406.

Referring now to FIG. 6, a schematic drawing of another embodiment 500 of a system for air scouring of a screen upstream of a discharge pipe is shown. In this embodiment, the waste water treatment system is substantially as shown in FIG. 5. A perforated plenum 558 similar to plenums 158,258,358 is disposed transversely of tank 406 near the bottom of screen 410 on the upstream side thereof and may be mounted conveniently on the closed end 412 of pipe 402. Plenum 558 is connected to a controllable source of compressed gas (not shown). Bubbles emanating from plenum 558 rise up along the upstream side of screen 410 to scour accumulated materials therefrom.

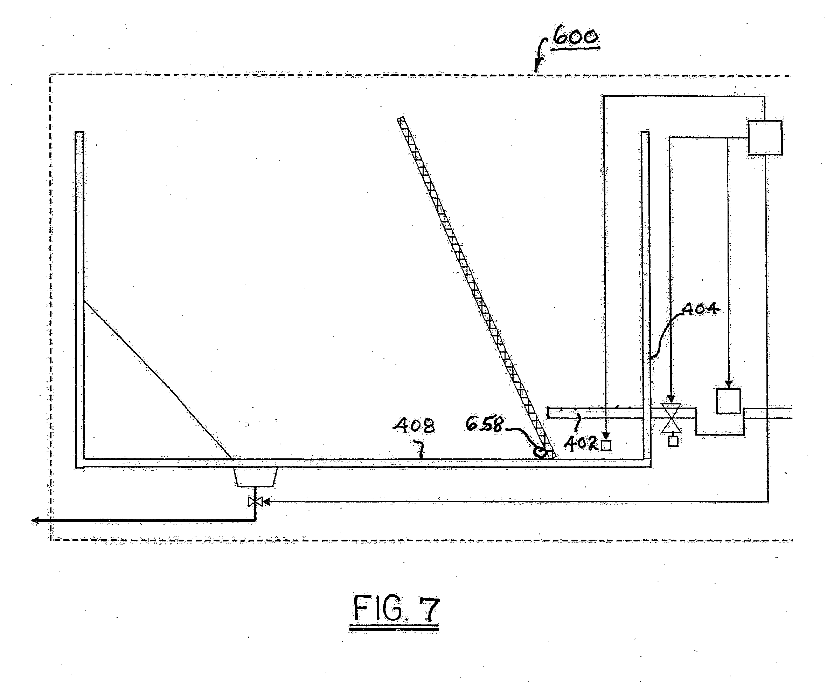

Referring to FIG. 7, embodiment 600 is similar to embodiment 500 except that discharge pipe 402 is not positioned on the bottom 408 of tank 406, but rather is positioned in wall 404 above the anticipated level of the sludge blanket that accumulates on the bottom of the tank. Plenum 658 is still positioned near the bottom of screen 410.

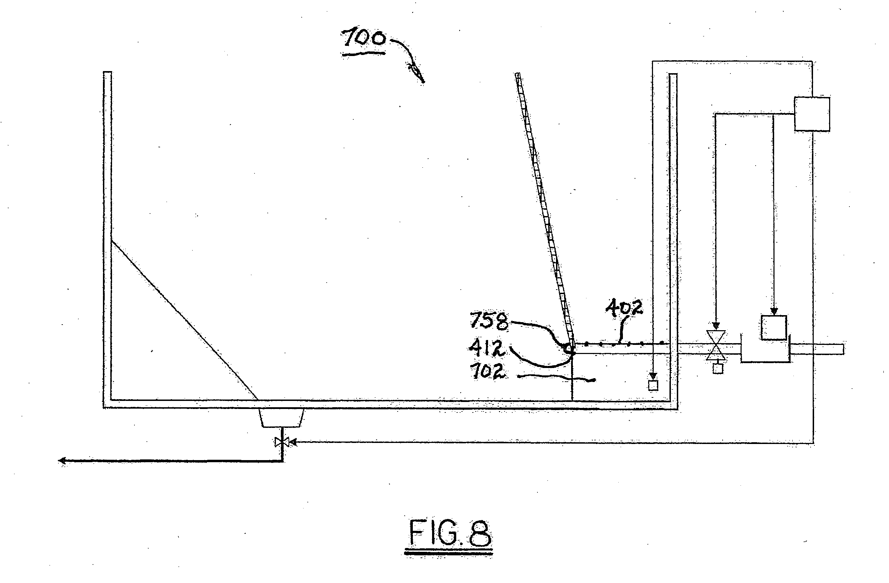

Referring to FIG. 8, in embodiment 700, discharge pipe 402 is elevated as in embodiment 600 but is provided with a bench 702 for receiving pipe 402 and the lower end of screen 410. Preferably, pipe 402 is closed at end 412 and perforated along the upper length for receiving screened influent as in embodiments 500,600. Plenum 758 is preferably mounted to closed end 412.

In any of the above embodiments, the entire top half of pipe 402 may be open to receive fluid that has passed through the screen.

From the foregoing description, it will be apparent that there has been provided an improved method and apparatus for cleaning the upstream screen surface of an SBX in a wastewater clarifier. Variations and modifications of the herein described air scour system, in accordance with the invention, will undoubtedly suggest themselves to those skilled in this art. Accordingly, the foregoing description should be taken as illustrative and not in a limiting sense.

## Claims

1. A screen box assembly comprising:
a) an ultrafine screen;
b) a three-dimensional screen frame supportive of said screen and sealed along the screen edges to prevent liquids and solids from bypassing said screen; and
c) an air plenum attached to said frame, wherein said air plenum is attached to a lower region of said SBX, and wherein said plenum is supplied from a source of compressed gas and is provided with a plurality of exit holes, and wherein gas exiting said exit holes flows along the surface of said SBX screen to scour accumulated residues from said screen surface.

2. A system for scouring a screen box assembly disposed in liquid influent, comprising:
a) a perforated plenum attached to said screen box assembly at a location below the surface of said liquid influent; and
b) a compressed gas source connected to said perforated plenum.

3. A system in accordance with Claim 1 wherein said plenum is disposed at the bottom of said screen box assembly.

4. A system in accordance with Claim 3 wherein said plenum is disposed within said screen box assembly and said plenum perforations extend through a sidewall of said screen box assembly.

5. A system in accordance with Claim 3 wherein said plenum is disposed on an outer surface of said screen box assembly.

6. A system in accordance with Claim 2 wherein said compressed gas is air.

7. A system in accordance with Claim 2 wherein said perforations are about one-sixteenth of an inch in diameter.

8. A system in accordance with Claim 2 wherein sodium hypochlorite is added to the compressed air.

9. A method for scouring the outer surface of a screen box assembly disposed in liquid influent comprising the steps of:
a) providing a perforated plenum attached to said screen box assembly at a location below the surface of said liquid influent, and a compressed gas source connected to said perforated plenum; and
b) dispensing a controlled flow of said compressed gas from said source through said plenum perforations to create bubbles rising in said liquid effluent along said outer surface of said screen box assembly.

10. A method in accordance with Claim 9 wherein said controlled flow is carried out at a rate of one standard cubic foot per minute.

11. A method in accordance with Claim 9 wherein sodium hypochlorite is added to said compressed air.

12. A method for scouring the upstream surface of screening disposed in liquid influent ahead of a static discharge pipe, comprising the steps of:
a) providing a perforated plenum adjacent said screening at a location near the bottom of said screening, and a compressed gas source connected to said perforated plenum; and
b) dispensing a controlled flow of said compressed gas from said source through said plenum perforations to create bubbles rising in said liquid effluent along said upstream surface of said screening.

13. A method in accordance with Claim 12 wherein said screening is disposed in a tank for receiving said liquid influent and extends above the highest influent level in said tank and is sealed to opposite walls of said tank.

14. A system in accordance with Claim 13 wherein said static discharge pipe and said plenum are disposed adjacent the bottom of said tank.

15. A system in accordance with Claim 13 wherein said static discharge pipe and said plenum are spaced apart from the bottom of said tank.

16. A system in accordance with Claim 12 wherein said compressed gas is air.

17. A system in accordance with Claim 12 wherein sodium hypochlorite is added to compressed gas.

18. A system for scouring the upstream surface of a screen vertically disposed in a flowing liquid influent, comprising:
a) a perforated plenum disposed adjacent the bottom edge of said screen on the upstream side thereof; and
b) a compressed gas source connected to said perforated plenum.
